# EUROPEAN PATENT APPLICATION

(11) **EP 1 859 889 A1**
(43) Date of publication of application: **28.11.2007**
(21) Application number: 07251751.9
(22) Date of filing: 25.04.2007
(51) Int. Cl.: B23K 20/02, B23P 15/00, F01D 5/34

(54) **A method of manufacturing a component made of two workpieces through Hot Isostatic pressure with deposition of a coating with reduced density on at least one of the workpieces**

(30) Priority: 26.05.2006 GB 0610468
(71) Applicant: Rolls-Royce plc, London SW1E 6AT (GB)
(72) Inventor: Voice, Wayne Eric, West Bridgford Notthingham, NG2 5JB (GB); Mei, Junfa, Northfield Birmingham, B31 2BE (GB)
(74) Representative: Gunn, Michael Alan

(57) **Abstract**

A first workpiece comprises a compressor disc (2) manufactured from a titanium alloy forging. A number of second workpieces, aerofoil blades (4), also forged from titanium alloy are arranged for attachment to the disc (2). The aerofoil blades (4) are evenly distributed around the radially outer surface (8) of the disc (2) and the root (6) of each blade (4) is joined to the surface (8) of the disc (2) by hot isostatic pressing. To assist in joining the blades (4) to the disc (2), one of the surfaces (6,8) is modified by reducing the density by 50-70% to a depth of 0.25-0.5mm. This is achieved by depositing a layer of metal powder on the surface. Modifying one of the surfaces (6,8) forms a compliant layer between the workpieces (2,4). When pressurised this compliant layer accommodates distortion during consolidation and also acts to disrupt the other surface to reveal virgin material and enhance bonding.

## Description

The present invention relates to a method of manufacturing a component from a number of workpieces. In particular the present invention relates to the joining of workpieces by applying hot isostatic pressure.

Integrally bladed discs, known as blisks, comprise a plurality of blades joined to a disc to form a unitary structure. Conventional methods of manufacturing blisks involve either manufacturing from solid or friction welding the blades onto stubs on the disc. Both of these methods of manufacture are expensive and there is a requirement for low-cost blisk manufacture.

Diffusion bonding can be applied to join components where optimum strength and minimum distortion is required. However unless the mating surfaces are precisely aligned then gaps and porosity remain along the interface and compromise the integrity of the joint. One way of eliminating this is to contain the sections to be joined within a sealed vessel and hot isostatically press.

In GB 2,424,200 A, filed by the applicant, a method of hot isostatically pressing workpieces together is enhanced by applying a loose powder to a cavity between the workpieces. Under the application of the hot isostatic pressure the powder in the cavity is consolidated to form a union piece. Consolidation of the powder permits the precise alignment of the workpieces and a continuous, profiled surface along the bond line is formed.

The use of a partially consolidated block of powder as described in GB 2,424,200 A has however caused assembly problems. The block can slip and it adds cost and complexity to the process.

The present invention seeks to provide a simplified method of joining workpieces without the need to use a consolidated block of powder.

According to the present invention a method of manufacturing a component from a first and a second workpiece comprises the steps of modifying a surface of at least one of the first or the second workpieces by reducing its density, placing the modified surface in contact with a surface of the other workpiece and applying a hot isostatic pressure to bond the surfaces of the two workpieces together characterised in that the change in density is achieved by the deposition of a layer of material onto the surface.

Preferably a surface of one of the workpieces is modified by reducing its density by 50-70%. In a preferred embodiment of the present invention the modified layer has a thickness of the order of 0.25-0.5mm.

The layer of material may be deposited on the surface by sintering, laser deposition, or plasma spraying. The deposited material may be a powder and have a different composition to the surface of the workpieces.

By modifying one of the surfaces to be joined a compliant layer is introduced between the workpieces. When pressurised this compliant layer accommodates distortion during consolidation and also acts to disrupt the other surface to reveal virgin material and enhance bonding.

The present invention will now be described with reference to the accompanying drawings in which:
Figure 1 is a cross section through an assembly for manufacturing an integrally bladed disc in accordance with the present invention.
Figure 2 is a view showing a single blade modified in accordance with one aspect of the present invention.
Figure 3 is an enlarged view of the root of the blade shown in figure 2.
Figure 4 is a view showing the surface of a disc modified in accordance with a second aspect of the present invention.
Figure 5 is an enlarged view of the surface of the disc shown in figure 4.

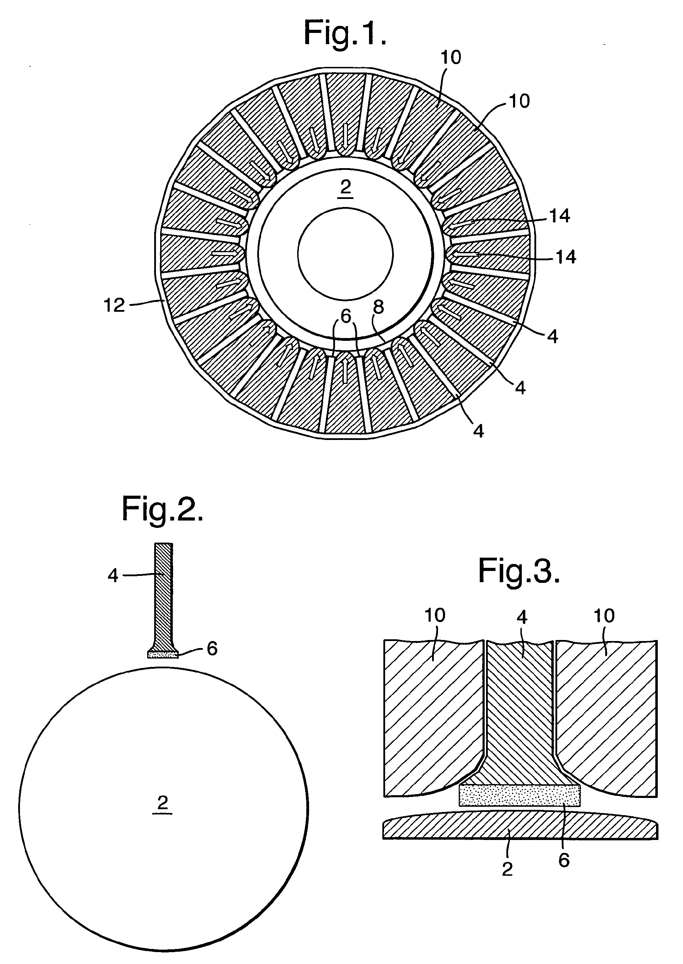

Referring to figure 1 a first workpiece comprises a compressor disc 2 manufactured from a titanium alloy forging. A number of second workpieces, aerofoil blades 4, are forged from the same titanium alloy and are arranged for attachment to the disc 2. The aerofoil blades 4 are evenly distributed around the radially outer surface 8 of the disc 2 and the root 6 of each blade is joined to the radially outer surface 8 of the disc 2 so that they project radially therefrom.

To assist in joining the blades 4 to the disc 2 either the root 6 of each blade 4 or the outer surface 8 of the disc is modified. The surface 8 or 6 is modified by reducing its density by 50-70% to a depth of 0.25-0.5mm. This is achieved by depositing a layer of metal powder on the surface. The powder may be deposited by known techniques such as sintering, laser deposition or plasma spraying.

In one embodiment of the present invention the root 6 of the blade 4 is modified. The reduction in the density of the surface 6 is achieved by depositing a titanium powder onto the existing surface, figure 3.

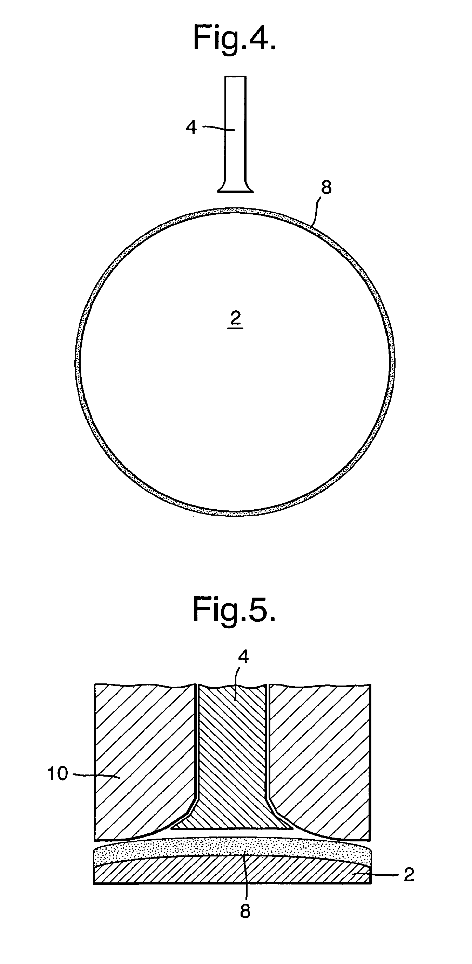

Figure 4 shows a second embodiment of the present invention in which the radially outer surface 8 of the disc 2 is modified. The radially outer surface 8 has a titanium powder layer deposited thereon, figure 5.

One of the surfaces 6 or 8 is modified prior to arranging the blades 4 around the disc 2, figure 1. Removable tooling pieces 10, made from mild steel and provided with a boron nitride coating, occupy the spaces between adjacent blades 4. The tooling pieces 10 are wedge shaped and conform to the region between adjacent blades 4. The whole assembly is enclosed in a mild steel bag 12, which is evaluated and sealed around the assembly.

Once encased in the bag 12 the assembly is placed in an oven (not shown) and surrounded by an inert gas under pressure. The pressure of the inert gas is increased to between 100-150 MPa and the temperature raised to between 920° and 930°C. The assembly is kept at this temperature for about four hours, during which time the inward pressure generated by the inert gas on the steel bag 12 forces the blades 4 and the tooling pieces 10 radially inwards. The abutting arrangement of the tooling pieces 10 ensures that the load applied to the assembly is directed radially inwards, with a minimum amount of load applied to the blades 4. A forging force, denoted by arrows 14 in figure 1, diffusion bonds the blades 4 to the outer surface 8 of the disc 2.

The modified surface acts as a compliant layer between the blades 4 and the disc 2. When pressurised this compliant layer accommodates a judicious amount of distortion during consolidation and also acts to disrupt the other surface to reveal virgin material and enhance the diffusion bonding.

The application of pressure and temperature to a workpiece is known as hot isostatic pressing and it will be understood that the variables of pressure and temperature will vary depending upon the material to be joined and the amount of consolidation required.

After the hot isostatic pressing the steel bag 12 is removed mechanically and the tooling pieces 10 are removed from the blisk assembly. Removal of the tooling pieces 10 is eased by the boron nitride coating and by the thermal contraction of the mild steel, which is greater than the thermal contraction of the titanium alloy from which the blisk is made.

The blisk is then dressed to remove any surface impurities and final machining processes are carried out.

It will be understood that whilst the present invention has been described with reference the manufacture of a blisk it is equally applicable to the joining of any two workpieces by hot isostatic pressure. Hot isostatic pressing is the joining of workpieces by the application of heat and pressure and includes the use of hot radial pressure. The process is also applicable to the joining of different materials and the surface of one of the workpieces may be modified by the deposition of a different material.

## Claims

1. A method of manufacturing a component from a first (2) and a second (4) workpiece comprising the steps of modifying a surface (6, 8) of at least one of the first or the second workpieces (2, 4) by a reduction in density, placing the modified surface (6, 8) in contact with a surface (8, 6) of the other workpiece and applying a hot isostatic pressure to bond the surfaces of the two workpieces together **characterised in that** the change in density in the modified surface is achieved by the deposition of a layer of material onto the surface of the at least one of the workpieces.

2. A method as claimed in claim 1 in which the surface (6, 8) of one of the workpieces (2, 4) is modified by reducing the density of the surface by 50-70%.

3. A method as claimed in claim 1 or claim 2 in which the modified surface (6, 8) has a thickness of the order of 0.25-0.5mm.

4. A method as claimed in any preceding claim in which the layer of material is deposited onto a surface (6, 8) of one of the workpieces (2, 4) by sintering.

5. A method as claimed in any preceding claim in which the layer of material is deposited onto a surface (6, 8) of one of the workpieces (2, 4) by laser deposition.

6. A method as claimed in any preceding claim in which the layer of material is deposited onto a surface (6, 8) of one of the workpieces (2, 4) by plasma spraying.

7. A method as claimed in any preceding claim in which the deposited material is a powder.

8. A method as claimed in any preceding claim in which the powder has a different composition to the surfaces of the workpieces.
